# FASCICULE DE BREVET EUROPEEN

(11) **EP 1 284 893 B1**
(45) Date de publication et mention de la délivrance du brevet: **08.12.2004**
(21) Numéro de dépôt: 01938331.4
(22) Date de dépôt: 23.05.2001
(51) Int. Cl.: B60R 21/26

(54) **DISPOSITIF DE MISE EN OEUVRE D'UN ELEMENT, EN PARTICULIER DE SECURITE, POUR LA PROTECTION DE BIENS ET/OU DE PERSONNES**
VORRICHTUNG ZUR AKTIVIERUNG EINES SICHERHEITSELEMENTES FÜR GÜTER- UND PERSONENSCHUTZ
DEVICE FOR OPERATING AN ELEMENT, IN PARTICULAR A SAFETY ELEMENT, FOR PROTECTING GOODS AND/OR PEOPLE

(30) Priorité: 24.05.2000 FR 0006642; 24.05.2000 FR 0006643; 20.02.2001 FR 0102273; 20.02.2001 FR 0102274
(43) Date de publication de la demande: 26.02.2003
(73) Titulaire: SEVA TECHNOLOGIES, 75009 Paris (FR)
(72) Inventeur: Cord, Paul Philippe, 75009 Paris (FR)
(74) Mandataire: Breese, Pierre
(86) Numéro de dépôt international: PCT/FR2001/001612
(87) Numéro de publication internationale: WO 2001/089885

(56) Documents cités:
- EP-A- 0 480 085
- EP-A- 0 673 809
- EP-A- 0 728 630
- DE-A- 19 912 540
- US-A- 5 655 790
- US-A- 5 897 136

## Description

La présente invention se rapporte au domaine des dispositifs de mise en oeuvre d'un élément, en particulier de sécurité, pour la protection de biens et/ou de personnes.

La présente invention se rapporte plus particulièrement à un dispositif de mise en oeuvre d'un élément de sécurité notamment pour la protection d'au moins un occupant d'un véhicule, du type comportant un système de génération de gaz raccordé audit élément de sécurité, par exemple à un coussin gonflable de sécurité et comportant une charge explosible formée au moins par un composé pyrotechnique primaire et un composé secondaire.

Pour l'absorption de choc pour la protection des occupants des véhicules, l'art antérieur connaît essentiellement trois types de dispositifs :
1. les générateurs de gaz par combustion pure d'un composé pyrotechnique généralement solide tels que décrits dans les brevets US 3 865 660 et FR 2 730 965, la combustion de ce type de propergol génère des poussières préjudiciables au sac gonflable, au confort et à la santé du ou des occupants du véhicule. Pour améliorer la mise en régime de tels dispositifs munis d'un bloc de propergol, les brevets EP 0 480 085 et EP 0 728 630 proposent de déposer à la surface de ce dernier, des bandes de matériaux pyrotechniques d'allumage. D'autre part, Le brevet EP 0 420 726 utilise un propergol à base de Nitrocellulose qui ne génère pas de poussières mais de l'oxyde de carbone, gaz toxique et inflammable Il est également connu, notamment de la demande de brevet français N° FR 2 682 374, que les produits de décomposition d'un propergol du type double base peuvent être oxydés par du perchlorate de potassium. Comme dans les cas cités précédemment les inconvénients d'une telle configuration, sont en particulier d'élever la température des gaz de façon drastique et de générer des poussières très chaudes ;
2.les générateurs de gaz par combustion d'un composé pyrotechnique assurant le chauffage d'un gaz neutre stocké sous pression, encore appelés générateurs hybrides tel que celui décrit dans le brevet US 5 022 674. La combustion du composé pyrotechnique engendre comme dans les cas cités précédemment, une large quantité de poussières ;
3.Les générateurs de gaz hybrides dont les produits de combustion du composé pyrotechnique réagissent, avec l'Oxygène stocké dans les gaz comprimés, encore appelés générateurs hybrides réactifs, tel que celui décrit dans la demande de brevet européen EP 0 673 809. Dans ce cas, l'utilisation d'un propergol à base de Nitrocellulose ou de poudre du type Lova permet de générer des gaz sans poussières. Cependant, la combustion des produits de réaction crée une surpression dans la structure du générateur de gaz, qui doit, par conséquent, être renforcée. Le dispositif correspondant à la demande de brevet britannique GB 2 292 788, réalise la combustion en aval de la chambre des gaz stockés. Cependant, les débits des gaz objet de la post combustion n'étant pas ajustés, les caractéristiques des gaz générés (débit, composition, température) ne sont pas constantes lors de la mise en oeuvre du système et ne sont donc pas optimisées. Cette technologie permet d'utiliser d'autres types de composés combustibles tels du Magnésium sur un substrat organique comme cité dans le brevet US 5 655 790. Dans ce cas la génération d'entités réductrice n'est pas régulée comme dans le cas des propergols et le fonctionnement est analogue à celui des générateurs de gaz constitués par des mélanges gazeux combustibles dont le fonctionnement correspond à la vidange d'un réservoir sous très haute pression. De tels dispositifs sont par ailleurs décrits, à titre d'exemples, dans les brevets US 5 460 406, US 5 897 136, à partir duquel est établi le préambule de la revendication 1, et, EP 0 978 423.

De nombreux travaux ont eu pour objectif de formuler des propergols dont la source d'oxydant est le Nitrate d'Ammonium. Le brevet US 6123790 en est un exemple. Ces propergols ont pour inconvénient d'être difficiles à allumer, d'avoir de faibles vitesses de combustion à des pressions modérées, d'être hygroscopiques, et d'avoir un vieillissement des propriétés mécaniques difficile à maîtriser. Dans ce même objectif, les brevets US 5 868 424, WO 00/32 447 et WO 00/46 079 décrivent des charges pyrotechniques constituées de Nitrate d'Ammonium et de grains de propergol à base de Nitrocellulose ou de type Lova. Dans ce cas, la combustion de la charge pyrotechnique nécessite un fort confinement qui est obtenu soit dans un expulseur, soit dans un tube de type haute pression. Dans les deux cas, dès que la pression diminue sensiblement, la vitesse de combustion s'annihile.

L'art antérieur connaît par ailleurs, pour des applications particulières des dispositifs de mise en oeuvre d'un élément de sécurité qui utilisent des sources de gaz comprimés.

L'inconvénient majeur des dispositifs de mise en oeuvre d'un élément de sécurité de l'art antérieur qui utilisent des sources de gaz comprimé réside dans le fait que cette source doit être confinée dans une enceinte renforcée qui subit en permanence une surpression, jusqu'à la mise en oeuvre de l'élément de sécurité.

La présente invention entend remédier aux inconvénients de l'art antérieur en proposant un générateur hybride réactif à masse et dimensions réduites.

Pour ce faire, la présente invention se rapporte, dans son acception la plus large, à un dispositif selon la revendication 1.

Selon l'invention, le ou les composé(s) secondaire(s) présente(nt) une vitesse de décomposition nettement inférieure à la vitesse de décomposition du ou des composé(s) pyrotechnique(s) primaire(s) afin que le ou les composé(s) pyrotechnique(s) primaire(s) pilote(nt) après l'initialisation la décomposition du ou des composé(s) secondaire(s), ledit ou lesdits composé(s) pyrotechnique(s) primaire(s) permettant au moins une interaction des produits de combustion des composés primaire(s) réducteur(s) et secondaire(s) oxydant(s) par réaction d'oxydoréduction dans au moins un volume d'interaction non confiné ou faiblement confiné, dudit système de génération de gaz.

Une charge explosible s'entend d'un ensemble de constituants pouvant produire une ou plusieurs réactions chimiques exothermiques au cours de laquelle des gaz sont produits dans un laps de temps très court. Selon l'invention, les composés primaires et secondaires ainsi que leurs produits de réaction constituent la charge explosible.

Un volume faiblement confiné s'entend d'un volume tel que la pression des gaz réagissant dans ce volume, soit de préférence inférieure à quelques méga Pascal (Mpa), ce qui est significativement inférieur à celle des chambres de combustion de l'art antérieur.

Par interaction des produits de combustion des composés primaire(s) et secondaire(s), on entend une réaction physique et au moins partiellement chimique d'oxydo-réduction.

Le/les composé(s) pyrotechnique(s) primaire(s). est ou sont un propergol ou une composition pyrotechnique dont les produits de décomposition gazeux sont partiellement constitués d'entités chimiques réductrices et le composé secondaire génère des entités gazeuses oxydantes.

Le/les composé(s) secondaire(s), lorsqu'il(s) est ou sont solide(s), est ou sont conditionné(s) dans une chambre non confinée ou faiblement confinée, appelée chambre de réaction, qui est aussi le lieu de la réaction d'oxydoréduction ou post combustion.

Dans les configurations de l'invention c'est au moins un composé pyrotechnique primaire qui pilote la décomposition d'au moins un composé secondaire. L'avantage d'une telle configuration est que la performance du composé secondaire, et par là du générateur, ne dépend que des caractéristiques fonctionnelles du composé primaire.

En outre, c'est le/les composé(s) secondaire(s) qui génère(nt) la plus grande partie des gaz du générateur. De plus le rapport relatif des composés primaire(s) et secondaire(s) permet, même dans le cas de la post combustion, un ajustement de la température finale des gaz du générateur. En effet, un excès de composé secondaire par rapport à la stoechiométrie permet cet ajustement.

Par rapport aux solutions de l'art antérieur fonctionnant sous haute pression, l'avantage du faible confinement, est de réduire la masse et le coût de la structure, de délivrer des gaz sans poussières et à vitesse modérée, donc moins agressifs pour le sac gonflable. Un autre avantage est la sécurité d'un tel système, la masse et le confinement des substances explosives étant plus faibles, les opérations de production, de transport et de stockage sont facilitées ainsi que celles de recyclage en fin de vie.

Quatre variantes de réalisation illustrent la présente invention.

Dans une première variante, ledit ou lesdits composé(s) pyrotechnique(s) primaire(s) est ou sont positionné(s) dans un expulseur et ledit volume d'interaction non confiné ou faiblement confiné est constitué par une chambre de réaction qui est aussi le lieu de la réaction d'oxydoréduction, positionnée, de préférence, entre ledit expulseur et ledit composé secondaire solide.

Dans une deuxième variante, ledit/lesdits composé(s) pyrotechnique(s) primaire(s) et ledit/lesdits composé(s) secondaire(s) solide(s) sont positionnés dans au moins un tube de réaction cylindrique et ledit volume d'interaction non confiné ou faiblement confiné est constitué par ledit tube de réaction.

Dans une troisième variante, ledit ou lesdits composé(s) pyrotechnique(s) primaire(s) est ou sont conditionné(s) dans une enceinte permettant un confinement dudit composé et une diffusion essentiellement radiale des produits de combustion.

Dans une quatrième variante, ledit/lesdits composé(s) pyrotechnique(s) primaire(s) étant positionné dans un expulseur comportant au moins une tuyère et ledit/lesdits composé(s) secondaire(s) se présentant sous la forme d'un mélange gazeux sous pression disposé dans un réservoir de gaz stockés comportant au moins un orifice fermé hermétiquement à l'aide d'un moyen de fermeture, la position relative et les caractéristiques géométriques de ladite ou desdites tuyère(s) et dudit ou desdits orifice(s) sont telles qu'elles permettent une régulation du débit des gaz produits.

Les applications d'un tel dispositif de mise en oeuvre d'un élément en particulier de sécurité sont nombreuses : l'élément de sécurité peut comporter une structure souple ou rigide destinée à être gonflée par effet de pressurisation ou comporter une structure à piston actionnée par effet propulsif.

Avantageusement, toutes les variantes du générateur de gaz permettent de maîtriser parfaitement la composition chimique et la température des gaz ainsi que leur cinétique d'expulsion hors du système de génération de gaz pour le gonflement d'une structure souple ou rigide ou le déclenchement d'une structure à piston du type vérin.

De plus, dans toutes les variantes, la combustion ou la décomposition du composé secondaire étant réalisée sous faible confinement, les générateurs de gaz sont peu propulsifs et les effets d'une surpression dans la structure du générateur de gaz selon l'invention sont donc beaucoup moins dangereux pour la performance et la sécurité du système que les effets d'une telle surpression dans les générateurs de gaz de l'art antérieur.

Avantageusement, selon l'invention, ledit ou lesdits composé(s) pyrotechnique(s) primaire(s) est ou sont constitué(s) par des matériaux énergétiques ayant une balance Oxygène négative, comme par exemple ceux du type à base de nitrocellulose, nitramites ou de type lova ou des matériaux énergétiques qui sont des propergols du type de ceux utilisés pour les coussins gonflables de sécurité dont la balance Oxygène a été éventuellement ajustée pour la rendre négative.

Les gaz générés par de tels propergols associés à ceux d'au moins un composé secondaire oxydant tel le Nitrate d'Ammonium permettent une post-combustion.

Ainsi, selon la version préférée de, l'invention, lorsque la source principale de gaz est le Nitrate d'Ammonium, les gaz générés lors de la mise en oeuvre contiennent des quantités de particules solides nulles ou très fortement réduites par rapport aux quantités de particules solides émises par les générateurs de gaz de l'art antérieur.

Ledit ou lesdits composé(s) secondaire(s) solide(s) est ou sont ainsi constitué(s) principalement par du Nitrate d'Ammonium ou ses dérivés ou un/des composé(s) dont la décomposition délivre des produits équivalents.

Pour obtenir des effets dits « doubles », il est possible de prévoir plusieurs composé(s) pyrotechnique(s) primaire(s) différents.

Avantageusement également, lors de la mise en oeuvre des variantes du générateur de gaz selon l'invention, la température des gaz du générateur peut être ajustée. Dans l'une des versions préférées.. de l'invention, le composé secondaire , tel le Nitrate d'Ammonium, fournit les gaz oxydants nécessaires à la postcombustion des gaz de combustion et permet en outre une génération complémentaire de gaz amenant l'ensemble des gaz générés à la température recherchée. Ainsi, les quantités de matériaux énergétiques sont ajustées au strict besoin fonctionnel, afin de gonfler le coussin gonflable avec la stricte quantité de gaz nécessaire et à la température prédéfinie. La quasi absence de particules, la température et les vitesses d'éjection des gaz limitent très sensiblement l'agressivité des gaz par rapport à l'art antérieur.

Avantageusement également, la première, la deuxième et la troisième variante permettent d'utiliser comme composé secondaire principal, du Nitrate d'Ammonium sous forme solide. Ce composé fournit la part la plus importante des gaz, et conditionné dans une structure non ou faiblement confinée présente l'avantage de limiter le poids du générateur de gaz. Ainsi les matériaux préconisés, en particulier le Nitrate d'Ammonium, sont peu onéreux, largement disponibles industriellement et ne présentent que des risques réduits pour l'environnement même après la fin de vie du générateur de gaz.

Un avantage important de la deuxième et la troisième variante de l'invention est de permettre de placer le générateur de gaz à l'intérieur de la structure souple ou rigide destinée à être gonflée. Cet avantage trouve des applications dans la réalisation des coussins gonflable de sécurité « thorax » et « rideau ».

De par sa souplesse, il peut également être imaginé que la deuxième et la troisième variante de l'invention soit positionnée sur des éléments particuliers, comme par exemple, pour pressuriser une ceinture de sécurité gonflable.

La présente invention propose en outre d'utiliser dans le générateur de gaz de la deuxième variante, un bi-composant formé par du propergol et du Nitrate d'Ammonium. Ce bi-composant peut se présenter sous différentes formes.

On comprendra mieux l'invention à l'aide de la description, faite ci-après à titre purement explicatif, d'un mode de réalisation de l'invention, en référence aux figures annexées :
- la figure 1 illustre une vue en coupe longitudinale de la première variante du dispositif selon l'invention ;
- la figure 2 illustre une vue en coupe longitudinale de la deuxième variante du dispositif selon l'invention dans laquelle ledit composé pyrotechnique primaire et ledit composé secondaire se présentent sous la forme d'un bi-composant ;
- la figure 3 illustre une vue en coupe longitudinale de la troisième variante du dispositif selon l'invention dans laquelle le composé pyrotechnique primaire est confiné ;
- la figure 4 illustre une vue en coupe longitudinale de la quatrième variante du dispositif selon l'invention ;
- la figure 5 illustre une vue en coupe transversale d'une version particulière de la deuxième variante du dispositif selon l'invention ;
- les figures 6 à 8 illustrent des vues en coupe transversale de bi-composants monolithes hétérogènes pour la mise en oeuvre de la deuxième variante ;
- la figure 9 illustre une vue en coupe transversale d'une version particulière de la troisième variante du dispositif selon l'invention ; et
- la figure 10 illustre une vue en coupe transversale d'une autre version particulière de la troisième variante du dispositif selon l'invention

Le dispositif (1) selon l'invention est un dispositif de mise en oeuvre d'un élément de sécurité en particulier pour la protection de biens et/ou de personnes et notamment pour la protection d'au moins un occupant d'un véhicule, du type comportant un système de génération de gaz (3) raccordé audit élément de sécurité [par exemple à un coussin gonflable de sécurité (2)] et comportant une charge explosible (4) formée au moins par un composé pyrotechnique primaire (5) et un composé secondaire (6).

Le dispositif selon l'invention est caractérisé en ce que le ou les composé(s) secondaire(s) (6) présente(nt) une vitesse de décomposition nettement inférieure à la vitesse de décomposition du ou des composé(s) pyrotechnique(s) primaire(s) (5) afin que le ou les composé(s) pyrotechnique(s) primaire(s) (5) pilote(nt) après l'initialisation la décomposition du ou des composé(s) secondaire(s), ledit ou lesdits composé(s) pyrotechnique(s) primaire(s) (5) permettant au moins une interaction des produits de combustion des composés primaire(s) réducteur(s) et secondaire(s) oxydant(s) par réaction d'oxydoréduction dans au moins un volume d'interaction (7) non confiné ou faiblement confiné, dudit système de génération de gaz (3).

En effet, la vitesse de décomposition du composé secondaire est nettement inférieure à celle du composé primaire. Celui-ci lui transfert l'énergie suffisante pour contrôler sa décomposition. Ainsi, il y a une véritable homothétie entre le débit du composé primaire et celui du composé secondaire. Le composé primaire permet la maîtrise de la durée de fonctionnement du générateur de gaz alors que c'est le composé secondaire qui est la source principale de gaz généré. En outre, dans la version préférée de l'invention, ledit ou lesdits composé(s) pyrotechnique(s) primaire(s) (5) est ou sont constitué(s) principalement par des matériaux énergétiques ayant une balance Oxygène négative ou nulle et le composé secondaire une balance Oxygène positive. La post-combustion réalisée permet d'obtenir une température des gaz homogène et optimale pour la fonction.

Ainsi, la température des gaz formés et leur cinétique d'expulsion hors du système de génération de gaz (3) pour le gonflement, par exemple, d'un coussin gonflable de sécurité (2) est parfaitement maîtrisée pendant toute la durée du gonflage.

Dans une version préférée de l'invention, ledit composé pyrotechnique primaire (5) est constitué par au moins un propergol et dans les trois première variantes de l'invention, ledit ou lesdits composé(s) secondaire(s) (6) solide(s) est ou sont constitué(s) principalement par du Nitrate d'Ammonium ou ses dérivés ou un/des composé(s) dont la décomposition délivre des produits équivalents.

Le ou les composé(s) secondaire(s) (6) peut/peuvent comporter au moins un liant énergétiques, comme par exemple la nitrocellulose, ou à un liant inerte, non énergétique, comme par exemple un liant époxy ; ledit ou lesdits composé(s) secondaire(s) (6) peut/peuvent aussi être enrobé(s), au moins partiellement, d'une pellicule organique de protection.

En outre, le ou les composé(s) secondaire(s) (6) peut/peuvent comporter des additifs balistiques pour faciliter leur(s) décomposition(s), tels que des oxydes minéraux, comme par exemple des oxydes de chrome ou de cuivre, des Nitrates alcalins ou alcalino-terreux, dans une proportion de préférence limitée à 15% en masse.

Ces additifs peuvent également contribuer à la tenue mécanique du composé secondaire (6) pendant sa durée de vie.

La présente invention permet aussi de pressuriser rapidement le coussin gonflable de sécurité (2) et de le maintenir pressurisé au-delà de 0,1 seconde pour une protection au niveau du thorax à plusieurs secondes pour des réalisations de type « rideau ».

Dans les trois premières variantes, ledit ou lesdits composé(s) secondaire(s) (6) se présente(nt) sous la forme d'un composé solide.

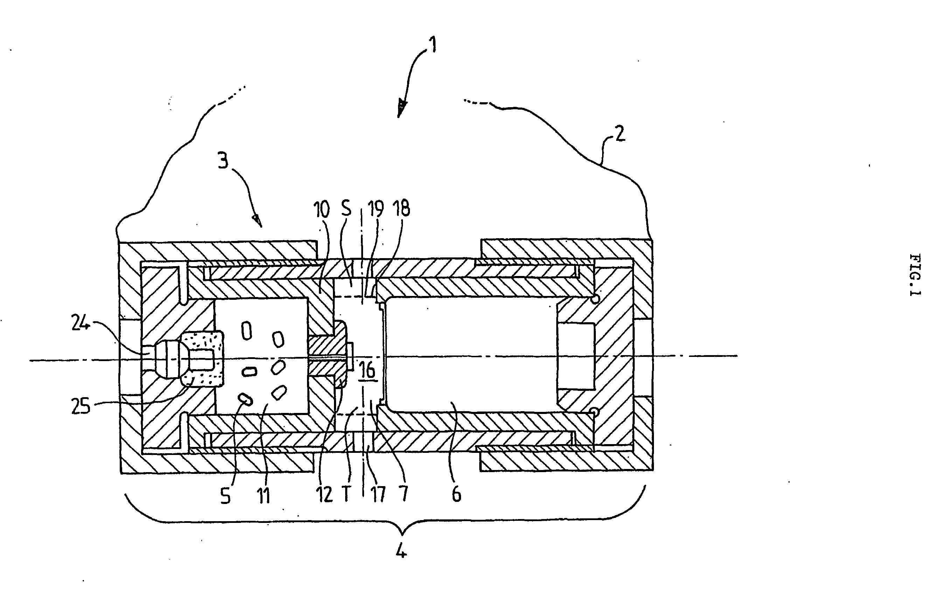

Dans une première variante, illustrée figure 1, l'expulseur (10) comprend un initiateur (24), muni d'une charge renforcatrice (25), au moins une chambre de stockage (11) à l'intérieur de laquelle peut être positionné ledit composé pyrotechnique primaire (5) et au moins.un orifice de sortie du type tuyère (12). Cet orifice de sortie est bien sûr maintenu fermé, par exemple à l'aide d'un opercule, jusqu'à la mise en oeuvre du dispositif (1) lors d'un choc.

Dans le générateur illustré figure 1, la chambre de. réaction (16), qui est aussi le lieu de la post-combustion est positionnée entre l'expulseur (10) et la chambre contenant le composé secondaire (6), mais il est aussi possible de réaliser le générateur de gaz de telle sorte que les gaz issus de l'expulseur (10) traversent la chambre contenant le composé secondaire (6) et que la chambre de réaction soit positionnée après la chambre contenant le composé secondaire (6).

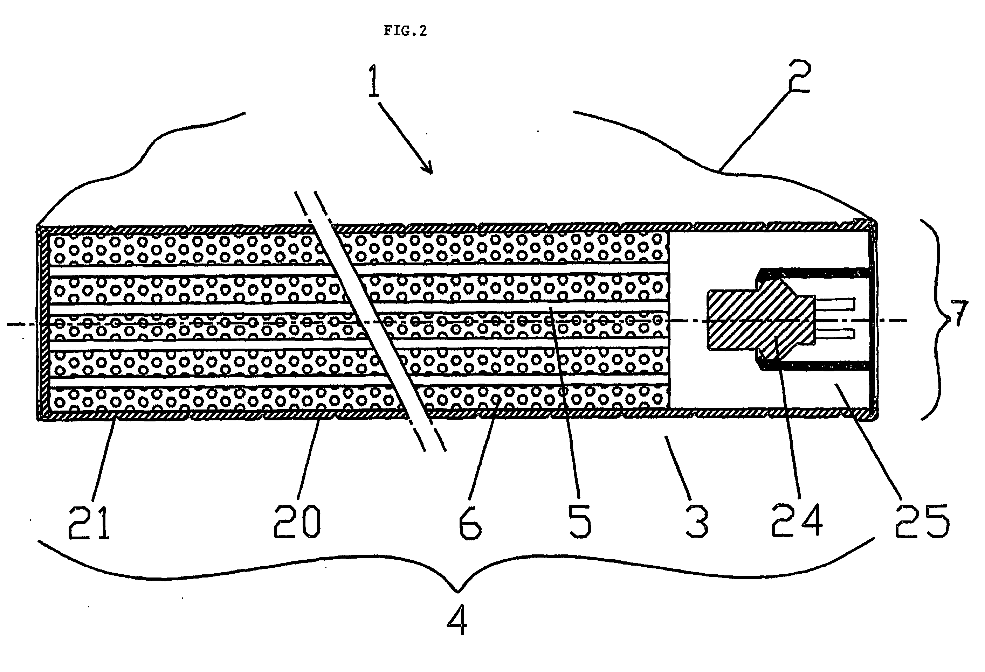

Dans une deuxième variante, illustrée figure 2, ledit/lesdits composé(s) pyrotechnique(s) primaire(s) (5) et ledit/lesdits composé(s) secondaire(s) (6) solide(s) sont positionnés dans au moins un tube de réaction (20) cylindrique et ledit volume d'interaction (7) non confiné ou faiblement confiné est constitué par ledit tube de réaction (20).

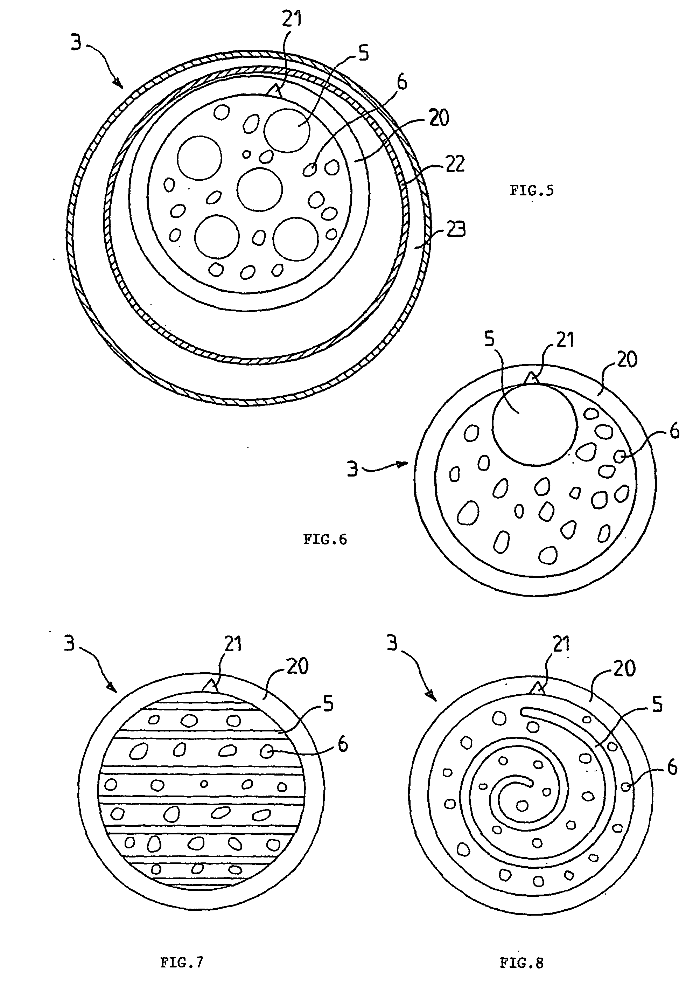

Le tube de réaction (20), du type haute pression, est positionné dans un tube poreux constituant une chambre secondaire de réaction (22), comme illustré figure 5.

L'initiateur (24) est muni d'une charge renforçatrice (25).

L'ouverture du tube de réaction (20) est de préférence programmée par des amorces de ruptures (21).

Lors de la mise en oeuvre, l'augmentation de pression ouvre le tube de réaction à partir de ses amorces de rupture et le tube secondaire de réaction maintient une pression modérée pour permettre éventuellement de prolonger la génération de gaz.

Le tube de réaction (20) peut en outre comporter une chambre de stabilisation (23) cylindrique, réalisée, par exemple avec un autre tube ou un sac en tissus.

Cette deuxième variante permet en outre de réaliser un dispositif de protection présentant une forme essentiellement longiligne et qui peut être placé, par exemple, dans un coussin gonflable de sécurité (2) latéral au-dessus d'une portière.

Dans la deuxième variante, lesdits composés primaire(s) (5) et secondaire(s) (6) solide(s) peuvent former une charge explosible (4) monolithe homogène ou hétérogène. Dans une version de l'invention, les 2 composés sont 2 propergols de vitesses et/ou de durée de combustion différentes.

Lorsque lesdits composés primaire(s) (5) et secondaire(s) (6) forment une charge explosible (4) monolithe hétérogène, ledit/lesdits composé(s) pyrotechnique(s) primaire(s) (5) se présente(nt) alors en vrac, pastillé ou non, ou sous la forme d'au moins une feuille (8), plate ou enroulée, ou d'au moins un brin (9) et ledit/lesdits composé(s) secondaire(s) (6) solide(s) se présente(nt) alors en vrac, pastillée ou non, ou sous la forme d'au moins une feuille, plate ou enroulée, ou d'au moins un brin.

La figure 5 illustre une pluralité de brins (9) de composé pyrotechnique primaire (5) positionnée à l'intérieur d'un composé.secondaire (6), en vrac, pastillée ou non.

Ledit ou lesdits composé(s) secondaire(s) (6) solide(s) peut ou peuvent être positionné(s) au moins partiellement en périphérie dudit ou desdits composé(s) pyrotechnique(s) primaire(s) (5), comme illustré figure 6, afin de créer un premier effet de pressurisation du coussin gonflable de sécurité et un deuxième effet de maintien de la pression dans le coussin gonflable.

Lorsque ledit composé pyrotechnique primaire (5) est réalisé sous forme d'au moins une feuille (8) et ledit composé secondaire (6) se présente en vrac, le bi-composant constitué par le composé pyrotechnique primaire (5) et le composé secondaire (6) peut alors se présenter sous la forme d'un sandwich plat, comme illustré figure 7 ou d'un sandwich enroulé, comme illustré figure 8.

Ledit ou lesdits composé(s) pyrotechnique(s) primaire(s) (5) peut ou peuvent être réalisé(s) sous forme d'une pluralité de brins (9) présentant des diamètres différents.

Pour plus de clarté, le tube secondaire de réaction (22) et la chambre de stabilisation (23) ne sont pas représentés sur les figures 2, 3 et 6 à 8.

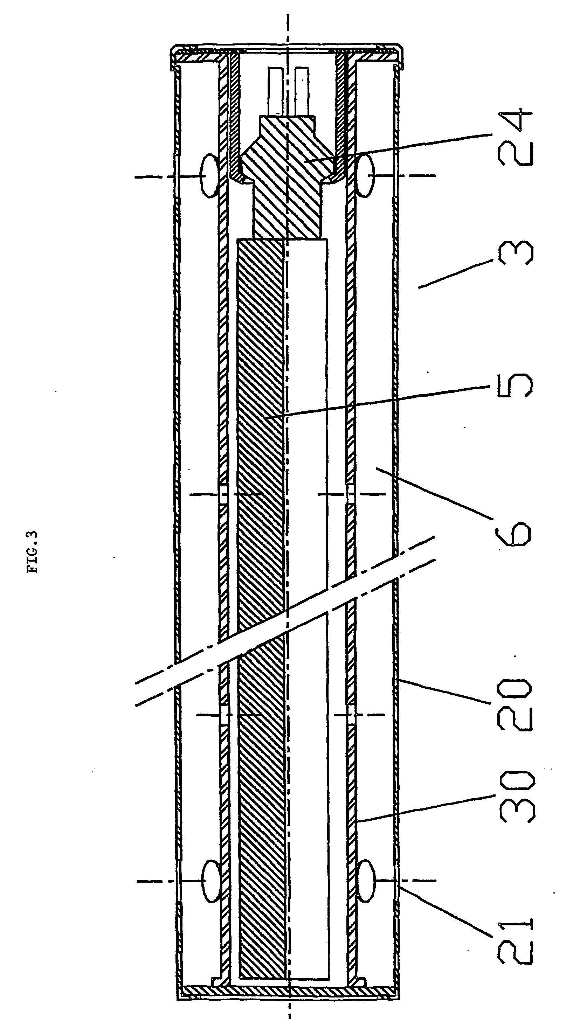

Dans une troisième variante, illustrée figure 3, ledit/lesdits composé(s) pyrotechnique(s) primaire(s) (5) et ledit/lesdits composé(s) secondaire(s) (6) solide(s) sont positionnés dans au moins un tube de réaction (20) cylindrique et ledit: volume d'interaction (7) non confiné ou faiblement confiné est constitué par ledit tube de réaction (20), comme pour la deuxième variante.

La troisième variante diffère de la deuxième variante essentiellement en ce que ledit composé pyrotechnique primaire (5) est conditionné dans une enceinte (30) permettant un confinement dudit composé et une diffusion essentiellement radiale des produits de combustion.

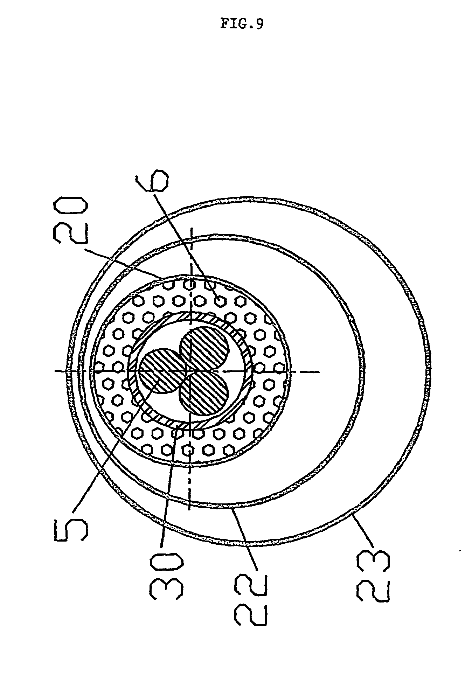

Le composé primaire (5) est conditionné dans l'enceinte (30) formée par un tube cylindrique de petit diamètre. Le composé secondaire (6) est conditionné autour de ce cylindre dans le tube de réaction (20). Le tube de réaction (20) peut être positionné dans un tube poreux constituant une chambre secondaire de réaction (22), comme illustré figure 9.

Le tube de réaction (20) peut en outre comporter une chambre de stabilisation (23) cylindrique, réalisée, par exemple avec un autre tube ou un sac en tissus.

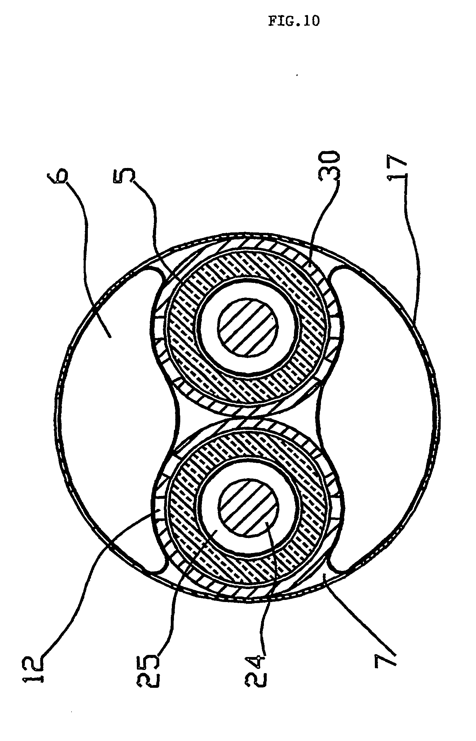

Cette conception permet une grande compacité et une grande flexibilité dans les performances :
- Pour obtenir le double effet, une simple cloison dans l'enceinte (30) permet le fractionnement du composé pyrotechnique primaire (5). Il n'est pas nécessaire de séparer rigoureusement le composé secondaire (6) dont la combustion n'est pas autonome.
- L'enceinte (30) avec le composé pyrotechnique primaire (5) peut être partagée en deux expulseurs montés parallèlement, le composé secondaire (6) est réparti dans un boîtier cylindrique contenant les deux. expulseurs, comme illustré figure 10.
- Le composé pyrotechnique primaire (5) peut être aussi fractionné en 2 charges séparées, l'une vive de pressurisation et l'autre plus lente de maintien de cette pressurisation. Dans ce cas, une simple ouverture dans la cloison de séparation, éventuellement équipée d'un retard permet d'assurer le gonflage d'un sac gonflable de type rideau.

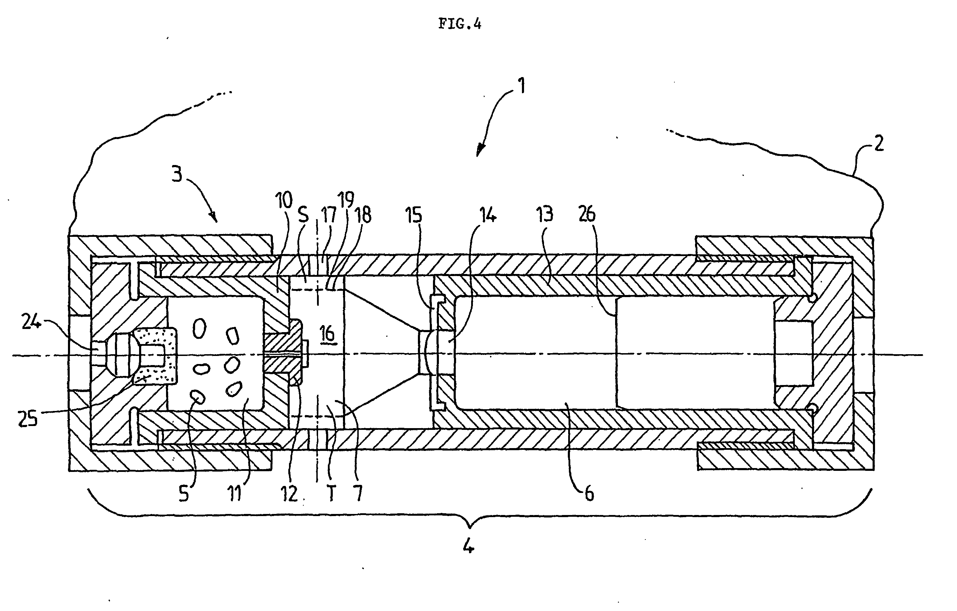

Dans une quatrième variante de l'invention, illustrée figure 4, ledit/lesdits composé(s) pyrotechnique(s) primaire(s) (5) étant positionné dans un expulseur (10) comportant au moins une tuyère (12) et ledit/lesdits composé(s) secondaire(s) (6) se présentant sous la forme d'un mélange gazeux sous pression disposé dans un réservoir de gaz stockés (13) et ledit volume d'interaction (7) non confiné ou faiblement confiné est constitué par une chambre de réaction (16) positionnée entre ledit expulseur (10) et ledit réservoir de gaz stockés (13).

L'expulseur (10) est du même type que celui de la première variante.

Dans cette quatrième variante, ledit réservoir de gaz stockés (13) comporte au moins un orifice (14) fermé hermétiquement à l'aide d'un moyen de fermeture (15), ledit réservoir de gaz stockés (13) étant destiné, lors de la rupture dudit moyen de fermeture (15), à permettre la libération des gaz stockés. Ces gaz vont alors réaliser la post-combustion des gaz du composé primaire (5) et participer au gonflement dudit coussin gonflable de sécurité (2). Les dimensions de cet orifice et sa distance à la tuyère sont déterminées pour assurer un débit du réservoir ajusté au débit des gaz du composé pyrotechnique (5).

La rupture dudit moyen de fermeture (15) est obtenue soit sous l'effet de la chaleur des gaz de l'expulseur, soit sous l'effet mécanique d'un percuteur projeté par les gaz chauds.

Ledit réservoir de gaz stockés (13) comporte éventuellement, à l'intérieur, une membrane (26) fixe ou mobile, ayant au moins un orifice dont le diamètre est inférieur à celui de l'orifice (14), afin de maintenir la pressurisation du coussin gonflable par la vidange de ce volume de gaz.

La position relative et les caractéristiques géométriques d'une part de ladite ou desdites tuyère(s) (12) et d'autre part dudit ou desdits orifice(s) (14) sont telles qu'elles permettent une régulation du débit des gaz produits dudit réservoir de gaz.

Dans la première comme dans la quatrième variante, ladite chambre de réaction (16) est en communication d'une part avec au moins ladite/lesdites tuyère(s) (12) dudit expulseur (10) et d'autre part avec le composé secondaire (6) ou ledit/lesdits orifice(s) (14) du réservoir de gaz stockés (13). Le dispositif (1) comporte au moins un moyen d'évacuation (17) des gaz produits en communication avec ledit coussin gonflable de sécurité (2).

Lesdits moyens d'évacuation (17) des gaz produits sont de préférence constitués par une grille d'évacuation comportant une pluralité d'évidements.

Dans la première, la troisième et la quatrième variante, la différence de pression entre la chambre contenant ledit composé pyrotechnique primaire (5) - expulseur (10) ou enceinte (30) - et ledit volume d'interaction (7) non confiné ou faiblement confiné est telle que l'écoulement à travers le ou les orifices de sortie des produits de combustion dudit composé pyrotechnique primaire (5), soit sonique. La vitesse des gaz émis par ledit composé pyrotechnique primaire (5) contribue au pilotage de la décomposition du composé secondaire (6).

Dans la première, la troisième et la quatrième variante, ledit expulseur (10) ou le tube de réaction (20) peut comporter deux chambres de stockage (respectivement (11) ou (30)) comportant chacune au moins un composé pyrotechnique primaire (5), la mise en oeuvre des chambres de stockage (11) ou (30) étant commandée soit séparément, soit l'une par l'autre, éventuellement avec un retard.

En outre, dans la première et la quatrième variante, ledit volume d'interaction (7) non confiné ou faiblement confiné peut être réalisé en deux parties, séparées par une grille de séparation (18) comportant une pluralité d'évidements (19), afin de réaliser d'une part une chambre primaire et/ou secondaire de réaction à forte turbulence T à proximité de l'orifice (14) de l'expulseur (10) et d'autre part une chambre de stabilisation S à proximité des moyens d'évacuation (17) des gaz produits.

Enfin, dans la première et la quatrième variante, un excès de composé secondaire permet un ajustement de la température dans le sac.

Ainsi, la température des gaz formés et leur cinétique d'expulsion hors du système de génération de gaz (3) pour le gonflement, par exemple, d'un coussin gonflable de sécurité (2) est parfaitement maîtrisée pendant toute la durée du gonflage.

Ledit/lesdits composé(s) secondaire(s) (6) peut/peuvent en outre assurer la réaction d'oxydoréduction des produits de décomposition du/des composé(s) pyrotechnique(s) primaire(s) (5) et une génération complémentaire de gaz.

Ledit/lesdits composé(s) secondaire(s) (6) peut/peuvent en outre poursuivre une génération complémentaire de gaz après le fonctionnement du/des composé(s) pyrotechnique(s) primaire(s) (5).

Pour une meilleure compréhension de l'invention, plusieurs exemples de réalisation d'une charge explosible (4) sont donnés ci-après en utilisant comme composé pyrotechnique primaire (5) soit un propergol à base de nitrocellulose ou nitramite ayant une balance Oxygène négative, comprise entre 30 % et 50 %, soit du type utilisé dans les coussins gonflables de sécurité avec une balance en oxygène sensiblement nulle :

Les propergols du type poudres balistiques à base de nitrocellulose, nitramites ou de liants énergétiques ou non, chargés en explosifs secondaires (Lova), délivrent des gaz contenant sensiblement 50 % de monoxyde de carbone CO, toxique et inflammable, qu'il convient d'oxyder.

Dans les trois premières variantes de l'invention, le composé secondaire (6) est principalement du Nitrate d'Ammonium dont les produits de décomposition contiennent 15 % d'Oxygène.

Dans ce cas, pour obtenir une balance Oxygène sensiblement nulle des gaz générés, le ratio minimum à considérer est compris entre 1,5 et 1,8 grammes de Nitrate d'Ammonium par gramme de propergol.

Dans ces mêmes configurations, l'accroissement relatif de la masse de Nitrate d'Ammonium aura pour effet d'augmenter le volume des gaz formés et d'abaisser leur température.

Dans la quatrième variante de l'invention, le composé secondaire (6) est du gaz stocké qui contient 20 % d'oxygène O₂.

Dans ce cas, , pour obtenir une balance en Oxygène sensiblement nulle des gaz générés, le ratio à considéré est compris entre 1,0 et 1,2 litre de gaz stockés par gramme de propergol.

Les exemples ci-dessous illustrent le gain de place et de poids susceptibles d'être obtenus avec un dispositif selon l'invention.
1/- 1^{ere} variante : le composé pyrotechnique primaire (5) est à base de nitrocellulose, le composé secondaire (6) est à base de Nitrate d'Ammonium.
   Pour un coussin gonflable de 100 litres environ, le système de génération de gaz comporte sensiblement 10 grammes de propergol et 18 grammes de Nitrate d'Ammonium. La décomposition du Nitrate d'Ammonium et la réaction de post-combustion sont réalisées dans la chambre de réaction sous des pressions de sensiblement 1 à 5 MPa.
   Le Nitrate d'Ammonium peut être associé à un liant organique, du type liant époxy, dans une proportion de 5 % en masse. La performance pour 100 litres de gaz généré est obtenue dans ce cas, avec 6 grammes de propergol et 24 grammes de composé secondaire.
   Ces dispositifs ont pour dimensions : diamètre inférieur à 40 mm, longueur inférieure à 150 mm et masse totale inférieure à 280 g.
2/- 1^{ere} variante, excès de composé secondaire : le composé pyrotechnique primaire (5) est à base de nitrocellulose, le composé secondaire (6) est à base de Nitrate d'Ammonium.
   Le système de génération de gaz comporte sensiblement 8 grammes de propergol et 32 grammes de Nitrate d'Ammonium. Le Nitrate d'Ammonium fournit les entités oxydantes nécessaires à la post-combustion des gaz réducteurs de combustion du propergol et un volume supplémentaire de gaz. Le volume gazeux est supérieur à 1,5 moles et la température des gaz après post-combustion est inférieure à 2000°K.
3/- 2^{ème} variante : pour un générateur de gaz de coussin gonflable de sécurité « rideau » d'un volume de 18 litres, 10 grammes de propergol sont conditionnés en brins de sensiblement 100 mm de long, 10 grammes du composé contenant le Nitrate d'Ammonium sont répartis autour de ces brins dans le tube de réaction (20).
   Le diamètre du générateur est inférieur à 30 mm, sa longueur est inférieure à 120:mm et sa masse totale est inférieure à 180 grammes.
4/- 3^{ème} variante : le composé pyrotechnique primaire (5) est à base de nitrocellulose, le composé secondaire (6) est à base de Nitrate d'Ammonium.
   Le système de génération de gaz comporte 10 grammes de propergol conditionnés dans une enceinte (30) tubulaire et 18 grammes de Nitrate d'Ammonium sont répartis autour de cette enceinte, dans le tube de réaction (20).
   Le "double effet" est obtenu par une cloison disposée dans l'enceinte (30) fractionnant la charge en 2 charges initiées de part et d'autre du tube.
   Un dispositif de protection d'un passager par coussin gonflable de 100 litres environ, a pour dimensions : diamètre inférieur à 30 mm, longueur inférieure à 120 mm et masse totale inférieure à 200 g.
5/- 3^{ème} variante : le composé pyrotechnique primaire (5) est à base de nitrocellulose, le composé secondaire (6) est à base de Nitrate d'Ammonium.
   Pour la réalisation d'un générateur de gaz de type « rideau » de 18 litres, le système de génération de gaz comporte une charge rapide de 3 grammes de propergol et une charge lente de 2 grammes de propergol, conditionnées dans l'enceinte (30) munie d'une cloison de séparation non étanche permettant l'initiation, éventuellement avec un retard, de la seconde charge par la première. Sensiblement 9 grammes de Nitrate d'Ammonium sont répartis radialement dans le tube de réaction (20).
   Le diamètre du générateur est inférieur à 30 mm, sa longueur est inférieure à 100 mm et sa masse totale est inférieure à 150 grammes.
   Pour l'ensemble des générateurs, la température finale des gaz peut être ajustée en fonction des besoins spécifiques par une augmentation de la masse du composé secondaire.
6/- 4^{ème} variante : le composé pyrotechnique primaire (5) est à base de nitrocellulose, le composé secondaire (6) se présente sous la forme d'un mélange gazeux sous pression.
   Le système de génération de gaz comporte sensiblement 10 grammes de propergol. Le volume gazeux du mélange de gaz est de l'ordre de 15 litres dans les conditions normales de pression et de température et la pression interne du réservoir est de l'ordre de 300 bars.
   Un dispositif de protection d'un passager par coussin gonflable de 100 litres environ, a pour dimensions : diamètre inférieur à 40 mm, longueur inférieure à 180 mm et masse totale inférieure à 400 g.
7/- 4^{ème} variante : le composé pyrotechnique primaire (5) est à base de nitrocellulose, le composé secondaire (6) se présente sous la forme d'un mélange gazeux sous pression.

Le système de génération de gaz comporte sensiblement 3 grammes de propergol. Le volume gazeux du mélange de gaz est de l'ordre de 15 litres dans les conditions normales de pression et de température ; le volume du réservoir de gaz stockés est de l'ordre de 50 cm³ et la pression interne:est de l'ordre de 30 MPa.

Une membrane est installée dans le réservoir pour retarder la diffusion des gaz de maintien de la pression dans le sac.

Un dispositif de protection de type « rideau » par coussin gonflable de 18 litres environ, a pour dimensions : diamètre inférieur à 25 mm, longueur inférieure à 220 mm et masse totale inférieure à 350 g.

De façon évidente, un excès gaz stocké réduit la température finale des gaz générés.

Dans le cas de la mise en oeuvre d'un vérin pour prétensionneur de ceinture de sécurité : la combustion d'une charge de poudre propulsive (0,3 à 0,8 g) à base de nitrocellulose décompose une masse sensiblement équivalente de Nitrate d'Ammonium. Les caractéristiques balistiques sont inchangées, mais le taux d'oxyde de carbone est réduit.

La présente invention peut également être utilisée pour la mise en oeuvre d'un dispositif d'apport de flottabilité, ou de création de flottabilité. Dans ce dernier cas, l'effet thermique est utilisé pour permettre la remontée à la surface d'un objet situé sous l'eau et sa récupération. Par exemple, un générateur contenant 10 g de matériaux pyrotechnique et fournissant l'équivalent de 10 litres de gaz ramené dans les conditions ordinaires, permet de pressuriser une structure de 10 litres par 300 m de fond et provoquer ainsi la remontée du bien qui y est associé.

L'invention est décrite dans ce qui précède à titre d'exemple. Il est entendu que l'homme du métier est à même de réaliser différentes variantes de l'invention sans pour autant sortir du cadre du brevet, tel que défini par les revendications.

## Revendications

1. Dispositif (1) de mise en oeuvre d'un élément, en particulier de sécurité, pour la protection de biens et/ou de personnes et notamment pour la protection d'au moins un occupant d'un véhicule, du type comportant un système de génération de gaz (3) raccordé audit élément de sécurité, par exemple à un coussin gonflable de sécurité (2), et comportant une charge explosible (4) formée au moins par un composé pyrotechnique primaire (5) initié par au moins un initiateur (24) muni d'une charge renforçatrice (25) et un composé secondaire (6), **caractérisé en ce que** le ou les composé(s) secondaire(s) (6) présente(nt) une vitesse de décomposition nettement inférieure à la vitesse de décomposition du ou des composé(s) pyrotechnique(s) primaire(s) (5) afin que le ou les composé (s) pyrotechnique(s) primaire ( s ) (5) pilote(nt) après l'initialisation la décomposition du ou des composé(s) secondaire(s), ledit ou lesdits composé(s) pyrotechnique(s) primaire(s) (5) permettant au moins une interaction des produits de combustion des composés primaire(s) et secondaire(s) par réaction d'oxydoréduction dans au moins un volume d'interaction (7) non confiné ou faiblement confiné, dudit système de génération de gaz (3).

2. Dispositif (1) selon la revendication 1, **caractérisé en ce que** ledit ou lesdits composé(s) secondaire(s) (6) se présente(nt) sous la forme d'un composé solide.

3. Dispositif (1) selon la revendication 2, **caractérisé en ce que** ledit ou lesdits composé(s) pyrotechnique(s) primaire(s) (5) est ou sont positionné(s) dans un expulseur (10) et ledit volume d'interaction (7) non confiné ou faiblement confiné est constitué par une chambre de réaction qui est aussi le lieu de la réaction d'oxydoréduction, positionnée, de préférence, entre ledit expulseur (10) et ledit composé secondaire (6) solide.

4. Dispositif (1) selon la revendication 2, **caractérisé en ce que** lesdits composés primaire(s) (5) et secondaire(s) (6) forment une charge explosible (4) monolithe homogène.

5. Dispositif (1) selon la revendication 2, **caractérisé en ce que** lesdits composés primaire(s) (5) et secondaire(s) (6) forment une charge explosible (4) monolithe hétérogène et **en ce que** lesdits composés primaire(s) (5) et secondaire(s) (6) se présentent en vrac, pastillé ou non, ou sous la forme d'au moins une feuille (8), plate ou enroulée, ou d'au moins un brin (9).

6. Dispositif (1) selon la revendication 5, **caractérisé en ce que** ledit ou lesdits composé(s) secondaire(s) (6) solide(s) est ou sont positionné(s) au moins partiellement en périphérie dudit ou desdits composé(s) pyrotechnique(s) primaire(s) (5).

7. Dispositif (1) selon la revendication 5 ou la revendication 6, **caractérisé en ce que** ledit ou lesdits composé(s) pyrotechnique(s) primaire(s) (5) est ou sont réalisé(s) sous forme d'une pluralité de brins (9) présentant des diamètres différents.

8. Dispositif (1) selon l'une quelconque des revendications 1 à 7, **caractérisé en ce que** ledit ou lesdits composé(s) pyrotechnique(s) primaire(s) (5) est ou sont conditionné(s) dans une enceinte (30) permettant un confinement dudit composé et une diffusion essentiellement radiale des produits de combustion.

9. Dispositif (1) selon l'une quelconque des revendications 1 à 8, **caractérisé en ce que** ledit ou lesdits composé(s) pyrotechnique(s) primaire(s) (5) est ou sont constitué(s) principalement par des matériaux énergétiques ayant une balance Oxygène négative.

10. Dispositif (1) selon la revendication 9, **caractérisé en ce que** lesdits matériaux énergétiques sont des propergols du type de ceux utilisés pour les coussins gonflables de sécurité dont la balance Oxygène a été ajustée pour la rendre négative.

11. Dispositif (1) selon l'une quelconque des revendications 1 à 10, **caractérisé en ce que** ledit ou lesdits composé(s) secondaire(s) (6) solide(s) est ou sont constitué(s) principalement par du Nitrate d'Ammonium ou ses dérivés ou un/des composé(s) dont la décomposition délivre des produits équivalents.

12. Dispositif (1) selon la revendication 11, **caractérisé en ce que** ledit ou lesdits composé(s) secondaire(s) (6) comporte(nt) :
■ des additifs balistiques pour faciliter leur(s) décomposition(s), tels que des oxydes minéraux, comme par exemple des oxydes de chrome ou de cuivre, des Nitrates alcalins ou alcalino-terreux, et/ou
■ des liants organiques énergétiques ou non, comme par exemple la nitrocellulose ou les résines époxy.

13. Dispositif (1) selon la revendication 11 ou la revendication 12, **caractérisé en ce que** ledit ou lesdits composé(s) secondaire(s) (6) est ou sont enrobé(s), au moins partiellement, d'une pellicule organique de protection.

14. Dispositif (1) selon l'une quelconque des revendications 1 à 13, **caractérisé en ce que** ledit/lesdits composé(s) pyrotechnique(s) primaire(s) (5) et ledit/lesdits composé(s) secondaire(s) (6) solide(s) sont positionnés dans au moins un tube de réaction (20) cylindrique et **en ce que** ledit volume d'interaction (7) non confiné ou faiblement confiné est constitué par ledit tube de réaction (20).

15. Dispositif (1) selon la revendication 14, **caractérisé en ce que** ledit tube de réaction (20) est positionné dans un tube poreux constituant une chambre secondaire de réaction (22).

16. Dispositif (1) selon la revendication 14 ou 15, **caractérisé en ce que** ledit tube de réaction (20) comporte une chambre de stabilisation (23).

17. Dispositif (1) selon la revendication 1, ledit/lesdits composé(s) pyrotechnique(s) primaire(s) (5) étant positionné dans un expulseur (10) comportant au moins une tuyère (12) et ledit/lesdits composé(s) secondaire(s) (6) se présentant sous la forme d'un mélange gazeux sous pression disposé dans un réservoir de gaz stockés (13) comportant au moins un orifice (14) fermé hermétiquement à l'aide d'un moyen de fermeture (15), **caractérisé en ce que** la position relative et les caractéristiques géométriques d'une part de ladite ou desdites tuyère(s) (12) et d'autre part dudit ou desdits orifice(s) (14) sont telles qu'elles permettent une régulation du débit des gaz produits.

18. Dispositif (1) selon la revendication 17, **caractérisé en ce que** ledit réservoir de gaz stockés (13) comporte, à l'intérieur, une membrane (26), ayant au moins un orifice dont le diamètre est inférieur à celui de l'orifice (14).

19. Dispositif (1) selon l'une quelconque des revendications 3 ou 5 à 18, ledit composé pyrotechnique primaire (5) étant positionné dans un expulseur (10) ou un tube de réaction (20), **caractérisé en ce que** ledit expulseur (10) ou le tube de réaction (20), comporte deux chambres de stockage (11) ou (30) comportant chacune au moins un composé pyrotechnique primaire (5), la mise en oeuvre des chambres de stockage (11) ou (30) étant commandée soit séparément, soit l'une par l'autre, éventuellement avec un retard.

20. Dispositif (1) selon l'une quelconque des revendications 1 à 19, **caractérisé en ce que** ledit volume d'interaction (7) non confiné ou faiblement confiné est réalisé en deux parties, séparées par une grille de séparation (18) comportant une pluralité d'évidements (19), afin de réaliser d'une part une chambre primaire et/ou secondaire de réaction à forte turbulence T et d'autre part une chambre de stabilisation S.

21. Dispositif (1) selon l'une quelconque des revendications 1 à 20, **caractérisé en ce que** ledit/lesdits composé(s) secondaire(s) (6) assure(nt) la réaction d'oxydoréduction des produits de décomposition du/des composé(s) pyrotechnique(s) primaire(s) (5) et une génération complémentaire de gaz.

22. Dispositif (1) selon l'une quelconque des revendications 1 à 21, **caractérisé en ce que** ledit/lesdits composé(s) secondaire(s) (6) poursuit/poursuivent une génération complémentaire de gaz après le fonctionnement du/des composé(s) pyrotechnique(s) primaire(s) (5).

23. Dispositif (1) selon l'une quelconque des revendications 1 à 22, **caractérisé en ce que** ledit élément, en particulier de sécurité, comporte une structure souple ou rigide destinée à être gonf lée par effet de pressurisation ou comporte une structure à piston actionnée par effet propulsif.

## Patentansprüche

1. Vorrichtung (1) zur Anwendung eines Elements, insbesondere eines Sicherheitselements, zum Schutz von Gütern und/oder Personen und vor allem zum Schutz mindestens eines Insassen eines Fahrzeugs, eines Typs, der ein System zur Erzeugung von Gas (3) aufweist, das an das besagte Sicherheitselement angeschlossen ist, zum Beispiel an einen Sicherheitsairbag (2), und eine explosionsfähige Ladung (4) aufweist, die von mindestens einer pyrotechnischen Primärverbindung (5) gebildet wird, die von mindestens einem Initialzünder (24) gezündet wird, der mit einer verstärkenden Ladung (25) versehen ist, und einer Sekundärverbindung (6), **dadurch gekennzeichnet, dass** die Umsetzungsgeschwindigkeit der Sekundärverbindung/en (6) deutlich unter der Umsetzungsgeschwindigkeit der pyrotechnischen Primärverbindung/en (5) liegt, damit die pyrotechnische/n Primärverbindung/en (5) nach der Zündung die Umsetzung der Sekundärverbindung/en steuert/n, wobei die besagte oder die besagten pyrotechnische/n Primärverbindung/en (5) mindestens eine Interaktion der Verbrennungsprodukte der Primär- und Sekundärverbindung/en durch Redoxreaktion in mindestens einem nicht eingeschlossenen oder schwach eingeschlossenen Interaktionsvolumen (7) des besagten Gaserzeugungssystems (3) erlaubt/en.

2. Vorrichtung (1) nach Anspruch 1, **dadurch gekennzeichnet, dass** die besagte oder die besagten Sekundärverbindung/en (6) in Form einer festen Verbindung auftritt/treten.

3. Vorrichtung (1) nach Anspruch 2, **dadurch gekennzeichnet, dass** die besagte oder die besagten pyrotechnische/n Primärverbindung/en (5) in einem Auswerfer (10) positioniert ist oder sind und das besagte, nicht eingeschlossene oder schwach eingeschlossene Interaktionsvolumen (7) von einer Reaktionskammer gebildet wird, die auch der Ort der Redoxreaktion ist und sich vorzugsweise zwischen dem besagten Auswerfer (10) und der besagten festen Sekundärverbindung (6) befindet.

4. Vorrichtung (1) nach Anspruch 2, **dadurch gekennzeichnet, dass** die besagte/n Primär- und Sekundärverbindung/en (5, 6) eine homogene monolithische explosionsfähige Ladung (4) bilden.

5. Vorrichtung (1) nach Anspruch 2, **dadurch gekennzeichnet, dass** die besagte/n Primär- und Sekundärverbindung/en (5, 6) eine heterogene monolithische explosionsfähige Ladung (4) bilden und dadurch, dass die besagte/n Primär- und Sekundärverbindung/en (5, 6) lose, gepresst oder nicht, oder in Form mindestens einer flachen oder aufgerollten Folie (8), oder mindestens eines Strangs (9) auftreten.

6. Vorrichtung (1) nach Anspruch 5, **dadurch gekennzeichnet, dass** die besagte/n feste/n Sekundärverbindung/en (6) mindestens teilweise am Rand der besagte/n pyrotechnische/n Primärverbindung/en (5) positioniert ist oder sind.

7. Vorrichtung (1) nach Anspruch 5 oder Anspruch 6, **dadurch gekennzeichnet, dass** die besagte/n pyrotechnische/n Primärverbindung/en (5) in Form einer Vielzahl von Strängen (9) ausgeführt ist oder sind, die verschiedene Durchmesser haben.

8. Vorrichtung (1) nach einem der vorhergehenden Ansprüche 1 bis 7, **dadurch gekennzeichnet, dass** die besagte/n pyrotechnische/n Primärverbindung/en (5) in einem abgeschlossenen Bereich (30) verpackt ist oder sind, der einen Einschluss der besagten Verbindung ermöglicht und eine im wesentlichen radiale Streuung der Verbrennungsprodukte.

9. Vorrichtung (1) nach einem der vorhergehenden Ansprüche 1 bis 8, **dadurch gekennzeichnet, dass** die besagte/n pyrotechnische/n Primärverbindung/en (5) hauptsächlich von energetischen Stoffen mit einer negativen Sauerstoffbilanz gebildet werden.

10. Vorrichtung (1) nach Anspruch 9, **dadurch gekennzeichnet, dass** die besagten energetischen Stoffe Treibstoffe in der Art derer sind, die für Sicherheitsairbags verwendet werden, deren Sauerstoffbilanz angepasst wurde, damit sie negativ ist.

11. Vorrichtung (1) nach einem der vorhergehenden Ansprüche 1 bis 10, **dadurch gekennzeichnet, dass** die besagte/n feste/n Sekundärverbindung/en (6) hauptsächlich von Ammoniumnitrat oder seinen Derivaten oder einer Verbindung/en gebildet werden, deren Umsetzung äquivalente Produkte liefert.

12. Vorrichtung (1) nach Anspruch 11, **dadurch gekennzeichnet, dass** die besagte/n feste/n Sekundärverbindung/en (6) aufweist/aufweisen:
• ballistische Zusatzstoffe, um ihre Umsetzung zu erleichtern, wie mineralische Oxide, wie zum Beispiel Chrom- oder Kupferoxide, alkalische oder Erdkali-Nitrate, und/oder
• organische Bindemittel, energetische oder nicht, wie zum Beispiel Nitrozellulose oder Expoxidharze.

13. Vorrichtung (1) nach Anspruch 11 oder nach Anspruch 12, **dadurch gekennzeichnet, dass** die besagte/n Sekundärverbindung/en (6) zumindest teilweise von einem organischen Schutzfilm überzogen ist oder sind.

14. Vorrichtung (1) nach einem der vorhergehenden Ansprüche 1 bis 13, **dadurch gekennzeichnet, dass** die besagte/n pyrotechnische/n Primärverbindung/en (5) und die besagte/n feste/n Sekundärverbindung/en (6) in mindestens einem zylindrischen Reaktionsrohr (20) positioniert sind und dadurch, dass das besagte nicht eingeschlossene oder schwach eingeschlossene Interaktionsvolumen (7) von besagtem Reaktionsrohr (20) gebildet wird.

15. Vorrichtung (1) nach Anspruch 14, **dadurch gekennzeichnet, dass** das besagte Reaktionsrohr (20) in einem porösen Rohr positioniert ist, das eine sekundäre Reaktionskammer (22) bildet.

16. Vorrichtung (1) nach Anspruch 14 oder 15, **dadurch gekennzeichnet, dass** das besagte Reaktionsrohr (20) eine Stabilisationskammer (23) umfasst.

17. Vorrichtung (1) nach Anspruch 1, wobei die besagte/n pyrotechnische/n Primärverbindung/en (5) in einem Auswerfer (10) positioniert ist/sind, der mindestens ein Strahlrohr (12) aufweist und die besagte/n Sekundärverbindung/en (6) in Form eines gasförmigen Gemischs unter Druck auftreten, das in einem Gasvorratsbehälter (13) angeordnet ist, der mindestens eine mittels eines Verschlusses (15) hermetisch geschlossene Öffnung (15) aufweist, **dadurch gekennzeichnet, dass** die relative Position und die geometrischen Eigenschaften des/r besagten Strahlrohrs/rohre (12) einerseits und der besagten Öffnung/en (14) andererseits so sind, dass sie die Regulierung des Durchsatzes der erzeugten Gase erlauben.

18. Vorrichtung (1) nach Anspruch 17, **dadurch gekennzeichnet, dass** der besagte Gasvorratsbehälter (13) im Innern eine Membran (26) aufweist, die mindestens eine Öffnung hat, deren Durchmesser kleiner ist als der Durchmesser der Öffnung (14).

19. Vorrichtung (1) nach einem der Ansprüche 3 oder 5 bis 18, wobei die besagte pyrotechnische Primärverbindung (5) in einem Auswerfer (10) oder in einem Reaktionsrohr (20) positioniert ist, **dadurch gekennzeichnet, dass** der besagte Auswerfer (10) oder das Reaktionsrohr (20) zwei Depotkammern (11) oder (30) aufweisen, von denen jede mindestens eine pyrotechnische Primärverbindung (5) aufweist, wobei die Anwendung der Depotkammern (11) oder (30) entweder separat oder die eine durch die andere, eventuell mit einer Verzögerung, gesteuert wird.

20. Vorrichtung (1) nach einem der Ansprüche 1 bis 19, **dadurch gekennzeichnet, dass** das besagte, nicht eingeschlossene oder schwach eingeschlossene Interaktionsvolumen (7) aus zwei Teilen besteht, die von einem Trenngitter (18) getrennt werden, das eine Vielzahl von Aussparungen (19) aufweist, um einerseits eine Primär- und/oder Sekundär-Reaktionskammer mit starken Turbulenzen T und andererseits eine Stabilisationskammer S auszubilden.

21. Vorrichtung (1) nach einem der Ansprüche 1 bis 20, **dadurch gekennzeichnet, dass** die besagte/n Sekundärverbindung/en (6) die Redoxreaktion der Umsetzungsprodukte der pyrotechnischen Primärverbindung/en (5) und eine ergänzende Gaserzeugung gewährleistet/en.

22. Vorrichtung (1) nach einem der Ansprüche 1 bis 21, **dadurch gekennzeichnet, dass** die besagte/n Sekundärverbindung/en (6) nach dem Betrieb der pyrotechnischen Primärverbindung/en (5) eine ergänzende Gaserzeugung fortsetzt/en.

23. Vorrichtung (1) nach einem der Ansprüche 1 bis 22, **dadurch gekennzeichnet, dass** das besagte Element, insbesondere das Sicherheitselement, eine elastische oder starre Struktur aufweist, die dazu bestimmt ist, durch Druckbelüftung aufgeblasen zu werden, oder eine Struktur mit einem Kolben, der durch Propulsion betrieben wird.

## Claims

1. Device (1) for use of an element, particularly a safety element for protection of goods and / or persons, and particularly for the protection of at least one vehicle occupant, of the type comprising a gas generation system (3) connected to the said safety element, for example to an inflatable safety cushion (2) and comprising an explosive charge (4) formed from at least one primary pyrotechnic compound (5) initiated by at least one initiator (24) provided with a reinforcing charge (25) and a secondary compound (6), **characterised in that** the decomposition speed of the secondary compound(s) (6) is significantly less than the decomposition speed of the primary pyrotechnic compound(s) (5) such that the primary pyrotechnic compound(s) (5) control decomposition of the secondary compound(s), after initialisation, the said primary pyrotechnic compound(s) (5) enabling at least one interaction of combustion products of the primary and /or secondary compounds by an redox reaction in at least one unconfined or slightly confined interaction volume (7) of the said gas generation system (3).

2. Device (1) according to claim 1, **characterised in that** the said secondary compound(s) (6) is (are) in the form of a solid compound.

3. Device (1) according to claim 2, **characterised in that** the said primary pyrotechnic compound(s) (5) is or are positioned in an expulsion unit (10) and the said unconfined or slightly confined interaction volume (7) is composed of a reaction chamber that is also the location of the redox reaction, preferably positioned between the said expulsion unit (10) and the said solid secondary compound (6).

4. Device (1) according to claim 2, **characterised in that** the said primary (5) or secondary (6) compounds form an explosive homogeneous monolithic charge (4).

5. Device (1) according to claim 2, **characterised in that** the said primary (5) and secondary (6) compounds form an explosive heterogeneous monolithic charge (4) and **in that** the said primary (5) and secondary (6) compounds are in bulk form, possibly in pellet form or in the form of at least one sheet (8), either flat or wound, or at least one strand (9).

6. Device (1) according to claim 5, **characterised in that** the said solid secondary compound(s) is or are positioned at least partially near the periphery of the said primary pyrotechnic compound(s) (5).

7. Device (1) according to either claim 5 or 6, **characterised in that** the said primary pyrotechnic compound(s) (5) is or are made in the form of a plurality of strands (9) with different diameters.

8. Device (1) according to any one of claims 1 to 7, **characterised in that** the said primary pyrotechnic compound(s) (5) is or are packaged in a chamber (30) enabling confinement of the said compound and essentially radial diffusion of the combustion products.

9. Device (1) according to any one of claims 1 to 8, **characterised in that** the said primary pyrotechnic compound(s) (5) is or are composed mainly of high energy materials with a negative oxygen balance.

10. Device (1) according to claim 9, **characterised in that** the said high energy materials are propergols of the type used for inflatable safety cushions in which the oxygen balance has been adjusted to make it negative.

11. Device (1) according to any one of claims 1 to 10, **characterised in that** the said solid secondary compound(s) (6) is or are composed principally of ammonium nitrate or its derivatives or one or more compounds for which the decomposition outputs equivalent products.

12. Device (1) according to claim 11, **characterised in that** the said secondary compound(s) (6) comprise(s): ballistic additives such as mineral oxides, for example such as chromium or copper oxides, alkaline or alkaline - earth nitrates to facilitate their decomposition, and /or
high energy or low energy organic binders, for example such as nitrocellulose or epoxy resins.

13. Device (1) according to claim 11 or claim 12, **characterised in that** the said secondary compound(s) (6) is or are at least partially coated with a protective organic film.

14. Device (1) according to any one of claims 1 to 13, **characterised in that** the said primary pyrotechnic compound(s) (5) and the said solid secondary compound(s) (6) are positioned in at least one cylindrical reaction tube (20) and **in that** the said unconfined of slightly confined interaction volume (7) is composed of the said reaction tube (20).

15. Device (1) according to claim 14, **characterised in that** the said reaction tube (20) is positioned in a porous tube forming a secondary reaction chamber (22).

16. Device (1) according to either claim 14 or 15, **characterised in that** the said reaction tube (20) comprises a stabilisation chamber (23).

17. Device (1) according to claim 1, the said primary pyrotechnic compound(s) (5) being placed in an expulsion unit (10) comprising at least one nozzle (12) and the said secondary compound(s) (6) being in the form of a gaseous mix under pressure located in a stored gases reservoir (13) comprising at least one orifice (14) hermetically closed using a closing means (15), **characterised in that** the relative position and the geometric characteristics firstly of the said nozzle(s) (12) and secondly of the said orifice(s) (14) are such that they enable flow regulation of the gases produced.

18. Device (1) according to claim 17, **characterised in that** the said stored gases reservoir (13) comprises a membrane (26) on the inside with at least one orifice with a diameter less than the diameter of the orifice (14).

19. Device (1) according to any one of claims 3 or 5 to 18, the said primary pyrotechnic compound (5) being placed in an expulsion unit (10) or a reaction tube (20), **characterised in that** the said expulsion unit (10) or the said reaction tube (20) comprises two storage chambers (11) or (30) each comprising at least one primary pyrotechnic compound (5), the use of the storage chambers (11) or (30) being controlled separately, or one by the other possibly following a delay.

20. Device (1) according to any one of claims 1 to 19, **characterised in that** the said unconfined or slightly confined interaction volume (7) is made in two parts, separated by a separation grille (18) comprising several recesses (19), in order to make firstly a primary and /or secondary reaction chamber with high turbulence T and secondly a stabilisation chamber S.

21. Device (1) according to any one of claims 1 to 20, **characterised in that** the said secondary compound(s) (6) perform the redox reaction of decomposition products of the primary pyrotechnic compound(s) (5) and a complementary gas generation.

22. Device (1) according to any one of claims 1 to 21, **characterised in that** the said secondary compound(s) (6) continue(s) complementary gas generation after operation of the said primary pyrotechnic compound(s) (5).

23. Device (1) according to any one of claims 1 to 22, **characterised in that** the said element, particularly the safety element comprises a flexible or rigid structure designed to be inflated by a pressurisation effect or comprises a piston structure activated by a propulsion effect.
